# EUROPÄISCHE PATENTSCHRIFT

(11) **EP 2 072 427 B1**
(45) Veröffentlichungstag und Bekanntmachung des Hinweises auf die Patenterteilung: **26.01.2011**
(21) Anmeldenummer: 08171279.6
(22) Anmeldetag: 11.12.2008
(51) Int. Cl.: B65G 47/14, B29C 49/42, B29C 49/06

(54) **Vorrichtung zum Sortieren von Stückgut**
Sorting apparatus
Dispositif de tri

(30) Priorität: 17.12.2007 DE 102007061196
(43) Veröffentlichungstag der Anmeldung: 24.06.2009
(73) Patentinhaber: Krones AG, 93073 Neutraubling (DE)
(72) Erfinder: Deyerl, Heinrich, 92552 Teunz (DE)
(74) Vertreter: Bittner, Bernhard

(56) Entgegenhaltungen:
- EP-A- 1 690 813
- WO-A-02/36466
- WO-A-2006/082604
- FR-A- 2 424 122
- FR-A- 2 556 273
- FR-A- 2 802 903
- GB-A- 667 892
- GB-A- 1 597 177
- GB-A- 2 041 899
- GB-A- 2 070 546
- US-A- 3 721 328
- US-A- 4 688 373

## Beschreibung

Die vorliegende Erfindung betrifft eine Vorrichtung zum Sortieren von Stückgut. Die Vorrichtung wird unter Bezugnahme auf zu sortierende Vorformlinge beschrieben, die im Rahmen der Herstellung von Getränkebehältnissen in einem weiteren Verfahrensschritt zu Kunststoffflaschen expandiert werden. Die vorliegende Erfindung ist jedoch auch auf andere Arten von Stückgut anwendbar.

Derartige Vorrichtungen zum Sortieren von Stückgut sind aus dem Stand der Technik bekannt und dienen dazu, ungeordnetes Stückgut in eine gewisse vorbestimmte Ordnung zu bringen und dann in einem weiteren Verfahrensschritt das nunmehr geordnete Stückgut weiterbehandeln zu können.

Der FR 2 802 903 A lässt sich eine Vorrichtung zur Vereinzelung von Flaschen entnehmen. Die Flaschen werden beispielsweise von einem Sammelbehältnis zu Transportbändern eingeführt, um anschließend zu einer weiteren Vereinzelungsanlage, die in Form eines Trichters ausgebildet ist, geführt zu werden. Dieses Dokument beschreibt eine Vorrichtung gemäß dem Oberbegriff des Anspruchs 1.

Die US 3721 328 A offenbart eine Vorrichtung zum Vereinzeln bzw. Positionieren von aufeinanderliegenden Verschlussdeckeln. Ferner offenbart diese Druckschrift, dass die Deckel auf einem Transportband und an einer Klappe vorbeigeführt werden und diese Klappe dazu geeignet ist die aufeinanderliegenden Deckel voneinander zu trennen, d. h. den aufliegenden Deckel von dem darunter positionierten Deckel herunter zu schieben.

Die EP 1 690 813 A offenbart eine Rundlabyrinthanordnung zum Vereinzeln und Umpositionieren von Preforms, wobei in der Mitte der Vorrichtung ein Drehtisch angeordnet ist und durch die Rotation dieses Drehtisches die Preforms zu der Labyrinthanordnung bewegt werden.

Der US 4, 688, 373 A lässt sich eine komplexe Anordnung zum Transportieren oder Ausrichten von waverähnlichen Bauteilen entnehmen.

Die GB 1 597 177 A offenbart eine Vorrichtung zum Sortieren und Vereinzeln von länglichen Körpern. Dabei kommt eine spezielle Einrichtung zum Einsatz, die die Körper in der entsprechenden Orientierung und Position ausrichtet.

Die GB 2 070 546 A offenbart eine weitere Vorrichtung zum Vereinzeln von Stückgut. Diese Vorrichtung weist eine rotierende Einrichtung auf, um übereinanderliegendes Stückgut daran zu hindern, dass es in den Transportpfad eingeschleust wird.

Die GB 2 041 899 A offenbart eine Vorrichtung zum Vereinzeln von Kabeln. Die Kabel sind beispielsweise in einer Ansammlung angeordnet und sollen entsprechend einer weiteren Ansammlung geordnet werden. Zum Vereinzeln dieser Kabel ist eine Kurvenscheibe vorgesehen, deren Endfläche aufgrund einer Schwenkbewegung der gesamten Kurvenscheibe gegenüber der Ansammlung bewegt wird, wodurch einzelnen Kabeln ermöglicht wird in einen Kanal einzudringen.

Die GB 667,892 A offenbart eine Anordnung, in der Stückgut zu einer Stoppanordnung geführt wird, um durch eine Austoßeinrichtung aus der Ansammlung entfernt zu werden. Die Hauptansammlung wird mittels eines Stopps derart beschränkt, dass lediglich eine Ebene an Stückgut zu der Austoßeinrichtung gelangt.

Aus der FR 2 556 273 ist ein Verfahren zur Herstellung von Kunststoffflaschen bekannt. Dabei werden zwei Walzen verwendet, die sich gegenläufig zueinander drehen, und zueinander derart beabstandet sind, dass ein Bereich des Stückguts in den Zwischenraum zwischen den beiden Walzen gelangen, jedoch das Stückgut nicht zwischen den beiden Walzen hindurchrutschen kann. Durch die Drehbewegung der Walzen wird das Stückgut vereinzelt und in eine vorgegebene Richtung transportiert. Weiterhin ist ein Transportband vorgesehen, welches das noch ungeordnete Stückgut in Richtung der beiden Walzen transportiert. Dieses Dokument beschreibt ein Verfahren gemäß dem Oberbegriff des Anspruchs 10.
Bei modernen Anlagen zur Herstellung von Kunststoffbehältnissen wird jedoch zunehmend auf eine hohe

Produktionsgeschwindigkeit geachtet. Da das Stückgut noch völlig unsortiert auf den beiden Walzen ankommt, tritt teilweise das Problem auf, dass die beiden Walzen die hohe Menge an ungeordnet ankommendem Stückgut nicht mehr bewältigen können.

Der vorliegenden Erfindung liegt daher die Aufgabe zugrunde, eine Vorrichtung zum Sortieren von Stückgut zu schaffen, welche auch unter höheren Betriebsgeschwindigkeiten betreibbar ist.

Besonders bevorzugt handelt es sich bei dem Stückgut um Behältnisse und insbesondere um Vorformlinge.

Dies wird erfindungsgemäß durch eine Vorrichtung nach Anspruch 1 und ein Verfahren nach Anspruch 10 erreicht. Vorteilhafte Ausführungsformen und Weiterbildungen sind Gegenstand der Unteransprüche.

Die erfindungsgemäße Vorrichtung zum Sortieren von Vorformlingen weist eine Sortieranordnung auf, welche zwei parallel zueinander angeordnete Walzen besitzt, wobei diese Walzen um ihre Längsrichtung drehbar sind und derart gestaltet sind, dass die Vorformlinge entlang dieser Walzen genauer, entlang der Längsrichtung der Walzen, transportiert werden. Weiterhin ist eine Transporteinrichtung vorgesehen, die die Vorformlinge in Richtung der Sortieranordnung befördert. Oberhalb der Transporteinrichtung ist wenigstens eine Verschiebeeinrichtung vorgesehen, welche die Vorformlinge wenigstens teilweise berührt und bezüglich der Transporteinrichtung verschiebt-, wobei die Verschiebeeinrichtung wenigstens eine in der Transportrichtung der Vorformlinge schwenkbare Platte ist. Erfindungsgemäß weist die schwenkbare Platte an ihrer unteren Seite Ausnehmungen auf.

Die Sortieranordnung kann jedoch auch als "Sortierscheibe" ausgebildet sein, bei der eine Scheibe drehbar gelagert angeordnet ist, worauf das zu sortierende Stückgut gegeben wird. Durch die Drehung der Scheibe und der daraus resultierenden Zentrifugalkraft wird das Stückgut an den Rand der Scheibe gefördert, wo eine Leiste mit einem solchen Abstand über der Scheibe angeordnet ist, dass ein Teil des Stückgutes zwischen Leiste und Scheibe hindurchtreten kann, während ein anderer Teil - aufgrund eines größeren Durchmessers - hängen bleibt. Der Bereich des größeren Durchmessers kann z.B. der Halsringbereich eines zu sortierenden Preforms zur Flaschenherstellung sein.

Durch das Verschieben des Stückguts bezüglich der Transporteinrichtung wird eine gewisse Vorsortierung des Stückguts auf der Transporteinrichtung vorgenommen. Diese Vorsortierung bewirkt, dass das Stückgut nicht mehr vollkommen ungeordnet auf der Sortieranordnung ankommt, sondern bereits einen gewissen Ordnungsgrad erreicht hat. Die Sortieranordnung mit den zwei parallel zueinander angeordneten Walzen wird im Stand der Technik auch als Tannerförderer bezeichnet. Die Zentrifugalsortieranordnung wird oft als Scheibensortierer bezeichnet. Diese Vorsortierung kann grundsätzlich zu allen am Markt verfügbaren Sortiersystemen verwendet werden. Da, wie oben erwähnt, im Stand der Technik die Maschinengrößen und auch die Maschinenleistungen permanent zunehmen, werden im Stand der Technik auch die jeweils verwendeten Tannerförderer bzw. Scheibensortierer größer und teurer. Dabei wird erfindungsgemäß eine Vorsortierung bzw. Vorausrichtung des Stückguts, das heißt des Preforms stromaufwärts bzw. vor der eigentlichen Sortieranordnung vorgeschlagen.

Damit wird das Stückgut nicht, wie im Stand der Technik, kreuz und quer in die Sortieranordnung geschüttet, sondern durch eine Vorausrichtung mit einer gezielten Dosierung kann die Sortieranordnung leistungsfähiger und somit kleiner und platz-/kostengünstiger gebaut werden.

Bei einer vorteilhaften Ausführungsform weist die Verschiebeeinrichtung wenigstens eine in der Transportrichtung des Stückguts schwenkbare Platte auf, die so angeordnet ist, dass das Stückgut während des Transports auf der Transporteinrichtung wenigstens zeitweise einen Abschnitt dieser schwenkbaren Platten berührt. Genauer gesagt werden auf der Transporteinrichtung die ursprünglich kreuz und quer aufeinanderliegenden Anhäufungen des Stückguts durch herunterhängende schwenkbare Platten vereinzelt auf eine vorgegebene Pre-formebene gebracht.

Vorzugsweise handelt es sich bei der Transporteinrichtung um ein Transportband. Vorteilhaft ist weiterhin die Transporteinrichtung so angeordnet, dass das Stückgut auf der Transporteinrichtung im Wesentlichen senkrecht zu der Längsrichtung der Walze gefördert wird. Auf diese Weise ist eine besonders effiziente Übergabe des Stückguts von der Transporteinrichtung auf die Walzen möglich.

Bei einer weiteren vorteilhaften Ausführungsform sind wenigstens drei schwenkbare Platten in der Transportrichtung des Stückguts auf der Transporteinrichtung hintereinander angeordnet. Damit ist es möglich, durch mehrere derartige Platten die Preforms in Transportrichtung auszurichten, da der Tragring dieser Preforms in der Regel einen größeren Durchmesser als der Preformkörper hat. Erfahrungen halben gezeigt, dass durch Anordnung einer Platte ungefähr 75% des ankommenden Stückguts eine Ausrichtung aufweisen, bei der das Gewinde gegen die Transportrichtung zeigt und 24% des Stückguts eine Ausrichtung aufweisen, bei der das Gewinde in Transportrichtung zeigt. Bei nur noch 1% liegt das Stückgut noch quer zu dieser Transportrichtung.

Dieses bereits vorsortierte Stückgut kann anschließend von der Sortieranordnung leichter aufgenommen werden.

Bei einer weiteren vorteilhaften Ausführungsform weist wenigstens eine der schwenkbaren Platten an einer der Transporteinrichtung zugewandten Seite eine Ausnehmung auf. Dabei kann es sich beispielsweise um eine bogenförmige Ausnehmung handeln, welche derart gestaltet ist, dass der Körper der Preforms durch sie leichter hindurchtritt und der Tragring hängen bleiben würde. Falls nun ein Preform in Richtung dieser Ausnehmung transportiert wird, ergibt sich eine hohe Wahrscheinlichkeit dafür, dass der Preform in die gewünschte Endposition ausgerichtet wird.

Bei einer weiteren vorteilhaften Ausführungsform weisen wenigstens zwei hintereinander angeordnete Platten an der der Transporteinrichtung zugewandten Seite Ausnehmungen auf und diese Ausnehmungen liegen in der Transportrichtung des Stückguts auf der Transporteinrichtung hintereinander. Genauer gesagt befinden sich diese Ausnehmungen in Transporteinrichtung direkt hintereinander bzw. sind in einer Ansicht in der Transportrichtung zueinander im Wesentlichen deckungsgleich. Auf diese Weise wird erreicht, dass das ankommende Stückgut durch die einzelnen Platten mit den Ausnehmungen sukzessive in eine Sollposition gedreht wird.

Bei einer weiteren vorteilhaften Ausführungsform weist wenigstens eine Platte mehrere senkrecht zur Transporteinrichtung nebeneinanderliegende Ausnehmungen auf. Auf diese Weise kann insgesamt der Durchsatz erhöht werden, da auf mehreren nebeneinanderliegenden Linien die erfindungsgemäße Ausrichtung vorgenommen werden kann.

Bei einer weiteren vorteilhaften Ausführungsform ist zwischen der Transporteinrichtung und der Sortieranordnung eine Rutschenanordnung vorgesehen, entlang derer das Stückgut von der Transporteinrichtung zu der Sortiereinrichtung gleiten kann. Dabei wird das bereits vorsortierte Stückgut über die Rutscheneinrichtung auf vorteilhafte Weise auf die unterhalb der Transporteinrichtung liegende Sortiereinrichtung verbracht.

Bei einer weiteren vorteilhaften Ausführungsform weist diese Rutscheneinrichtung sich zwischen der Transporteinrichtung und der Sortieranordnung erstreckende Vertiefungen auf. Genauer gesagt handelt es sich bei dieser Rutscheneinrichtung über eine Art Well- oder Trapezblech, damit sich die Preforms nach Verlassen der Transporteinrichtung nicht mehr verdrehen können. Daneben könnten definiert nebeneinander angeordnete Rohre vorgesehen sein, die als weiteren positiven Nebeneffekt bewirken würden, dass Fremdpartikel, die auf die Transporteinrichtung gelangen sind, herausfallen können.

Vorzugsweise weisen diese Vertiefungen in der Rutscheneinrichtung einen konstanten Querschnitt auf.

Die vorliegende Erfindung ist weiterhin auf ein Verfahren zum Sortieren von Vorformlingen gerichtet, wobei die Vorformlinge von einer Transporteinrichtung auf eine Sortieranordnung gefördert werden und auf der Sortieranordnung mittels zweier Walzen, welche um ihre zueinander parallelen Längsrichtungen gedreht werden, entlang dieser Längsrichtungen gefördert werden. Dabei ist zwischen den beiden Walzen ein Zwischenraum angeordnet, der wenigstens einen Bereich der Vorformlinge aufnimmt.

Die Vorformlinge werden während des Transports auf der Transporteinrichtung mittels einer Verschiebeeinrichtung relativ zu der Transporteinrichtung bewegt bzw. verschoben-, wobei die Verschiebeeinrichtung wenigstens eine in der Transportrichtung der Vorformlinge schwenkbare Platte ist. Erfindungsgemäß weist die schwenkbare Platte an ihrer Unterseite Ausnehmungen auf.

Damit wird auch bei dem erfindungsgemäßen Verfahren auf der Transporteinrichtung bereits eine Vorsortierung des Stückguts vorgenommen.

Bei einer weiteren vorteilhaften Ausführungsform wird das Stückgut durch eine erste Verschiebeeinrichtung relativ zu der Transporteinrichtung verschoben, anschließend ruht es über einen vorbestimmten Zeitraum während der Bewegung auf der Transporteinrichtung bezüglich derselben und wird anschließend durch eine zweite Verschiebeeinrichtung wiederum relativ zu der Transporteinrichtung verschoben. Dies bedeutet, dass die Ausrichtung des Stückguts der Transporteinrichtung stufenweise erfolgt bzw. in der oben beschriebenen Art stufenweise durch mehrere hintereinander angeordnete schwenkbare Platten.

Besonders vorteilhaft wird zum Sortieren des Stückguts eine Vorrichtung der oben beschriebenen Art verwendet.

Weitere Ausführungsformen und Ausbildungsbeispiele ergeben sich aus den beigefügten Zeichnungen:
Darin zeigen:
   - Fig. 1: eine schematische Gesamtdarstellung einer erfindungsgemäßen Vorrichtung zum Sortieren von Stückgut;
   - Fig. 2: eine Darstellung einer schwenkbaren Platte in einer Draufsicht in der Transportrichtung;
   - Fig. 3: eine Draufsicht auf eine erfindungsgemäße Rutscheneinrichtung; und
   - Fig. 4: eine Rutscheinrichtung in einer weiteren Ausführungsform.

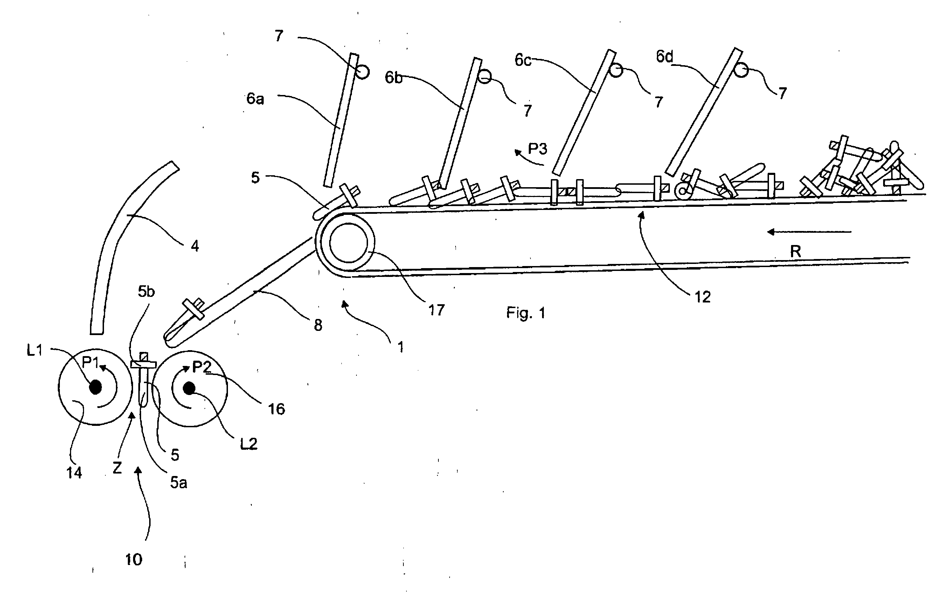

Fig. 1 zeigt eine erfindungsgemäße Vorrichtung zum Sortieren von Stückgut. Dabei bezieht sich das Bezugszeichen 10 auf eine Sortieranordnung zum Sortieren von Stückgut. Diese Sortieranordnung weist zwei Walzen 14, 16 auf, die nebeneinander angeordnet sind, wobei zwischen den Außenumfängen dieser beiden Walzen 14, 16 ein Zwischenraum Z entsteht. Die Größe dieses Zwischenraums Z ist derart gewählt, dass ein Grundkörper 5a des Stückguts 5 durch ihn hindurchtreten kann, ein Kragen 5b des Stückguts, bei dem es sich um Vorformlinge (Preforms) handelt, jedoch nicht.

Die beiden Walzen 14, 16 drehen sich gegenläufig in der durch die Pfeile P1 und P2 gezeigten Richtung. Durch diese Drehung wird bewirkt, dass das Stückgut entlang der beiden -Längsrichtungen L1 und L2 verschoben wird. Zu diesem Zweck sind bevorzugt die beiden Walzen 14, 16 leicht gegenüber der Waagrechten geneigt, das heißt die beiden Längsrichtungen L1 und L2 sind hier nicht exakt senkrecht zu der Figurenebene sondern um einen gewissen Winkel gegenüber dieser senkrechten Richtung geneigt.

Das Bezugszeichen 4 bezieht sich auf eine Abweiseinrichtung bzw. ein Abweisblech, welches bewirkt, dass solche Vorformlinge 5, die beispielsweise durch die Bewegung der Walze 14 nach außen gelangen würden, wieder in den Zwischenraum Z zwischen den beiden Walzen 14, 16 gelangen.

Das Bezugszeichen 12 bezieht sich auf eine Transporteinrichtung, die das Stückgut 5 in Richtung der beiden Walzen 14, 16 fördert. Diese Transporteinrichtung 12 ist als Transportband 12 aufgeführt, welches um eine Umlenkrolle 17 umgelenkt wird. Oberhalb des Transportbandes 12 sind vier schwenkbare Platten 6a bis 6d angeordnet. Diese schwenkbaren Platten 6a - 6d sind jeweils um Schwenkachsen 7 schwenkbar entlang des Pfeils P3 angeordnet. Während die auf dem Transportband 12 ankommenden Vorformlinge in der Transportrichtung R gefördert werden, berühren jedenfalls deren Krägen 5b die einzelnen Platten 6a bis 6d.

Da der Schwerpunkt der einzelnen Vorformlinge 5 unterhalb des Kragens 5b, genauer gesagt im Bereich des Grundkörpers 5a liegt, werden diese Vorformlinge durch die einzelnen Platten 6a bis 6d ausgerichtet. Man erkennt, dass in Figur 1 von rechts nach links zunehmend eine höhere Ordnung bzw. ein höherer Sortierungsgrad der Vorformlinge 5 auftritt. Nach Verlassen des Transportbandes 12 gelangen die vorsortierten Vorformlinge über eine Rutscheneinrichtung 8 zu der Sortieranordnung 10.

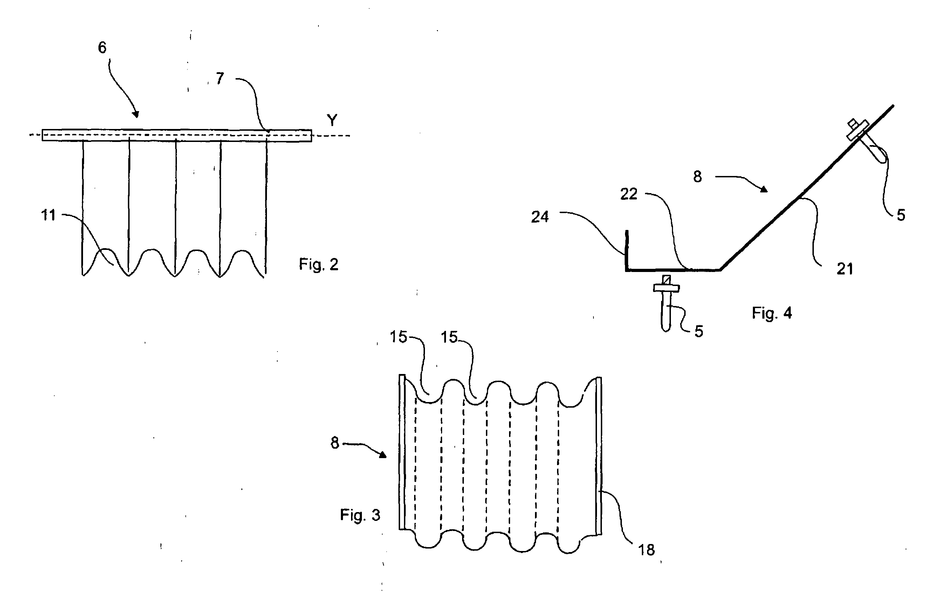

Fig. 2 zeigt eine der Platten 6a - 6d. Diese Platte ist, wie oben erwähnt, um eine Schwenkachse 7 bzw. die geometrische Achse Y schwenkbar gelagert. An ihrer unteren Seite weist die Platte 6a vier Ausnehmungen 11 auf. Diese Ausnehmungen dienen dazu, um die Vorformlinge 5 zu drehen. Genauer gesagt kann der Kragen 5b nicht in der Grundstellung der Platte 6a, in der diese vertikal in Richtung des Transportbandes 12 weist, hindurch treten, sondern hierzu ist es erforderlich, dass diese Platten 6a - 6d geringfügig schwenken.

Weiterhin wäre es auch möglich, dass die einzelne Platte 6a wiederum segmentiert ist, das heißt, dass die Bereiche in den einzelnen Ausnehmungen 11 zumindest teilweise auch gegeneinander schwenkbar sind. Vorzugsweise ist diese Platte 6a jedoch einteilig ausgeführt. Dadurch wird erreicht, dass beispielsweise vier Vorformlinge gleichzeitig bei der Sortieranordnung 10 ankommen.

Die Schwenkachse 7 könnte in einer anderen Ausführungsform auch oberhalb der Platte 6a - 6d angeordnet sein und nicht, wie in Fig. 1 gezeigt, seitlich hiervon. Weiterhin könnte eine Federungseinrichtung vorgesehen sein, welche je nach Bedarf die Platte 6a in ihrer Grundstellung ausrichtet. Anstelle der in Fig. 2 gezeigten vier Ausnehmungen 11 könnten jedoch auch mehrere oder weniger Ausnehmungen 11 vorgesehen sein.

Man erkennt, dass in Fig. 1 die Platte 6a nahezu am Ende des Transportbandes 12 angeordnet ist. Es wäre jedoch auch möglich, diese Platte 6a in einem gewissen Abstand zu dem Ende des Transportbandes 12 bzw. der Umlenkrolle 17 anzuordnen und beispielsweise in dem verbleibenden Wegabschnitt bis zu der Umlenkrolle 17 andere Führungseinrichtungen, wie in Transportrichtung R verlaufende Gatter oder dergleichen zur Führung der bereits vorsortieren Vorformlinie 5 vorzusehen.

Fig. 3 bezieht sich auf eine Rutscheneinrichtung 8, die zwischen der Transporteinrichtung 12 und der Sortieranordnung 10 angeordnet ist. Diese Rutscheneinrichtung 8 verläuft dabei schräg, das heißt die Vorformlinien gleiten entlang dieser Rutscheneinrichtung allein unter der Wirkung der Schwerkraft in Richtung der Sortieranordnung 10. Die Rutscheneinrichtung 8 ist hier als Wellblech ausgeführt, das heißt auch die Rutscheneinrichtung 8 weist vier Vertiefungen 15 auf, entlang derer die Vorformlinge rutschen können. Auf diese Weise wird erreicht, dass sich während des Rutschens der Vorformlinge 5 diese nicht verdrehen können. Genauer gesagt gelangen im Idealfall jeweils vier Vorformlinge hintereinander zwischen die beiden Walzen 14, 16 und werden anschließend befördert. Das Bezugszeichen 18 bezieht sich auf verstärkte Ränder der Rutscheneinrichtung 8, die in einem (nicht gezeigten) Gestell angeordnet sein können. Anstelle der Ausführung als gewelltes Blech könnte jedoch auch eine Rutscheneinrichtung mit Schlitzen vorgesehen sein, durch welche die Grundkörper 5a, nicht jedoch die Ränder 5b der Vorformlinge treten können. Auf diese Weise wäre es bei entsprechender Modifizierung möglich, die Vorformlinge bereits in der richtigen Orientierung zwischen die beiden Walzen 14, 16 fallenzulassen.

Ein weiteres Beispiel für eine derartige Rutscheneinrichtung ist in Fig. 4 dargestellt. Auch hier werden die Vorformlinge 5 entlang des schrägen Abschnitts 21 durch die Schwerkraft nach unten gefördert, bis sie in einen im Wesentlichen waagrechten Abschnitt 22 gelangen, der oberhalb der beiden Walzen 14, 16 angeordnet ist. In diesem Abschnitt ist die Rutscheneinrichtung derart gestaltet, dass die Vorformlinge nach unten, das heißt in den Zwischenraum Z zwischen den beiden Walzen 14, 16 fallen können. Das Bezugszeichen 24 bezieht sich auf einen Endanschlag für die Rutscheneinrichtung 8.

Der schräge Abschnitt 21 ist derart ausgeführt, dass zwar der Grundkörper 5a, nicht jedoch der Kragen 5b des Stückguts 5 durch ihn hindurch treten kann und der waagrechte Abschnitt 22 erlaubt auch ein Durchtreten des Kragens 5b, damit das Stückgut in seiner Gesamtheit nach unten fallen kann.

Bevorzugt weist die erfindungsgemäße Vorrichtung zum Sortieren eine Steuerungseinrichtung auf, die derart gestaltet ist, dass sie bewirkt, dass in dem Eintrittsbereich zwischen den beiden Walzen 14, 16, das heißt in dem Bereich, in dem das Stückgut 5 von der Rutscheneinrichtung 8 auf die Walzen 14, 16 fallen, sich kein Stückgut 5 befindet, wenn oberhalb des Transportbandes 12 die Vorsortierung vorgenommen wird.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Sortieren von Vorformlingen (5) mit einer Sortieranordnung (10) und mit einer Transporteinrichtung (12) welche die Vorformlinge (5) in Richtung der Sortieranordnung (10) fördert, wobei oberhalb der Transporteinrichtung (12) wenigstens eine Verschiebeeinrichtung (6a, 6b, 6c, 6d) vorgesehen ist, welche die Vorformlinge (5) wenigstens zeitweise berührt und bezüglich der Transporteinrichtung (12) verschiebt,
wobei, die Verschiebeeinrichtung (6a, 6b, 6c, 6d) wenigstens eine in der Transportrichtung (R) der Vorformlinge(5) schwenkbare Platte (6a, 6b, 6c, 6d) ist,
**dadurch gekennzeichnet, dass** die schwenkbare Platte an ihrer Unterseite Ausnehmungen (11) aufweist.

2. Vorrichtung nach Anspruch 1, **dadurch gekennzeichnet, dass**, die Sortieranordnung (10) zwei parallel zueinander angeordnete Walzen (14, 16) aufweist, wobei diese Walzen (14, 16) um ihre Längsrichtung (L1, L2) drehbar sind und wobei diese Walzen (14, 16) derart gestaltet sind, dass die Vorformlinge (5) entlang dieser Walzen (14, 16) transportiert werden.

3. Vorrichtung nach Anspruch 1, **dadurch gekennzeichnet, dass** die Sortieranordnung (10) eine drehbar gelagerte Scheibe aufweist, die im Bereich ihres äußeren Randes eine Leiste aufweist, die mit einem solchen Abstand zu der Scheibe angeordnet ist, dass die zu sortierenden Vorformlinge zwischen der Leiste und der Scheibe gehalten und transportiert werden, wobei die Vorformlinge aufgrund der sich drehenden Scheibe während des Sortierens mit einer Zentrifugalkraft beaufschlagt werden.

4. Vorrichtung (1) nach wenigstens einem der vorangegangenen Ansprüche, **dadurch gekennzeichnet, dass** die Transporteinrichtung (12) ein Transportband (12) ist.

5. Vorrichtung (1) nach wenigstens einem der vorangegangenen Ansprüche, **dadurch gekennzeichnet, dass** wenigstens drei schwenkbare Platten (6a, 6b, 6c, 6d) in der Transportrichtung (R) der Vorformlinge (5) auf der Transporteinrichtung (12) hintereinander angeordnet sind.

6. Vorrichtung (1) nach wenigstens einem der vorangegangenen Ansprüche, **dadurch gekennzeichnet, dass** wenigstens eine der schwenkbaren Platten (6a, 6b, 6c, 6d) an einer der Transporteinrichtung (12) zugewandten Seite eine Ausnehmung (11) aufweist.

7. Vorrichtung (1) nach Anspruch 4, **dadurch gekennzeichnet, dass** wenigstens zwei hintereinander angeordnete Platten (6a, 6b, 6c, 6d) an der der Transporteinrichtung (12) zugewandten Seite Ausnehmungen (11) aufweisen und diese Ausnehmungen (11) in der Transportrichtung (R) der Vorformlinge (5) auf der Transporteinrichtung (12) hintereinander angeordnet sind.

8. Vorrichtung (1) nach wenigstens einem der vorangegangenen Ansprüche, **dadurch gekennzeichnet, dass** zwischen der Transporteinrichtung (12) und der Sortieranordnung (10) eine Rutscheneinrichtung (8) vorgesehen ist, entlang derer die Vorformlinge von der Transporteinrichtung (12) zu der Sortieranordnung (10) gleiten können.

9. Vorrichtung (1) nach wenigstens einem der vorangegangenen Ansprüche, **dadurch gekennzeichnet, dass** die Transporteinrichtung (12) höher angeordnet ist als die Sortiereinrichtung (10).

10. Verfahren zum Sortieren von Vorformlingen (5), wobei die Vorformlinge(5) von einer Transporteinrichtung (12) auf eine Sortieranordung (10) gefördert werden, **dadurch gekennzeichnet, dass** die Vorformlinge (5) während des Transports auf der Transporteinrichtung (12) mittels einer in der Transportrichtung (R) der Vorformlinge schwenkbaren Platte_relativ zu der Transporteinrichtung (12) gedreht werden, wobei
die schwenkbare Platte (6a, 6b, 6c, 6d) an ihrer Unterseite Ausnehmungen (11) aufweist.

11. Verfahren nach Anspruch 10, **dadurch gekennzeichnet, dass** die zu sortierende Vorformlinge (5) auf der Sortieranordnung (10) mithilfe zweier Walzen (14, 16), welche um ihre zueinander parallelen Längsrichtungen (L1, L2) gedreht werden, entlang dieser Längsrichtungen (L1, L2) gefördert werden, wobei zwischen den beiden Walzen (14, 16) ein Zwischenraum (Z) angeordnet ist, der wenigstens einen Bereich der Vorformlinge (5) aufnimmt.

12. Verfahren nach Anspruch 10, **dadurch gekennzeichnet, dass** die zu sortierende Verformlinge (5) auf der Sortieranordnung (10) mithilfe einer drehbar gelagerten Scheibe sortiert werden, die auf die Vorformlinge (5) eine Zentrifugalkraft auswirkt und sie **dadurch** an den Randbereich der Sortieranordnung (10) bewegt, wo ein Transport zwischen der Scheibe und einer im Abstand zu dieser Scheibe angeordneten Leiste erfolgt.

13. Verfahren nach wenigstens einem der vorangegangenen Ansprüche 10 - 12, **dadurch gekennzeichnet, dass** zum Sortieren der Vorformlinge eine Vorrichtung nach wenigstens einem der vorangegangenen Ansprüche 1 - 9 verwendet wird.

## Claims

1. Apparatus (1) for sorting piece goods (5), comprising a sorting arrangement (10) and comprising a transport device (12) which conveys the piece goods (5) in the direction of the sorting arrangement (10), **characterised in that** arranged above the transport device (12) is at least one displacement device (6a, 6b, 6c, 6d) which makes contact with the piece goods (5) at least temporarily and displaces said piece goods relative to the transport device (12)wherein the displacement device (6a, 6b, 6c, 6d) is at least one plate (6a, 6b, 6c, 6d) which can pivot in the transport direction (R) of the piece goods (5), **characterised in that** the pivotable plate has recesses (11) on its bottom side.

2. Apparatus according to claim 1, **characterised in that** the sorting arrangement (10) comprises two rollers (14, 16) arranged parallel to one another, wherein these rollers (14, 16) can rotate about their longitudinal direction (L1, L2) and wherein these rollers (14, 16) are configured in such a way that the preforms (5) are transported along these rollers (14, 16).

3. Apparatus according to claim 1, **characterised in that** the sorting arrangement (10) comprises a rotatably mounted disc which in the region of its outer edge has a bar which is arranged at such a distance from the disc that the preforms to be sorted are held between the bar and the disc and are transported, wherein the preforms are acted upon by a centrifugal force during the sorting process due to the rotating disc.

4. Apparatus (1) according to at least one of the preceding claims, **characterised in that** the transport device (12) is a transport belt (12).

5. Apparatus (1) according to at least one of the preceding claims, **characterised in that** at least three pivotable plates (6a, 6b, 6c, 6d) are arranged one behind the other in the transport direction (R) of the preforms (5) on the transport device (12).

6. Apparatus (1) according to at least one of the preceding claims, **characterised in that** at least one of the pivotable plates (6a, 6b, 6c, 6d) has a recess (11) on a side facing towards the transport device (12).

7. Apparatus (1) according to claim 4, **characterised in that** at least two plates (6a, 6b, 6c, 6d) arranged one behind the other have recesses (11) on the side facing towards the transport device (12), and these recesses (11) are arranged one behind the other in the transport direction (R) of the preforms (5) on the transport device (12).

8. Apparatus (1) according to at least one of the preceding claims, **characterised in that** provided between the transport device (12) and the sorting arrangement (10) is a slide device (8), along which the preforms can slide from the transport device (12) to the sorting arrangement (10).

9. Apparatus (1) according to at least one of the preceding claims, **characterised in that** the transport device (12) is arranged higher than the sorting device (10).

10. Method for sorting preforms (5), wherein the preforms (5) are conveyed by a transport device (12) onto a sorting arrangement (10), the preforms (5) are moved during transport on the transport device (12) relative to the transport device (12) by means of a pivotable plate which is in the transport direction (R) of the preforms, wherein the pivotable plate (6a, 6b, 6c, 6d) has recesses (11) on its bottom side.

11. Method according to claim 10, **characterised in that**, by means of two rollers (14, 16) which are rotated about their parallel longitudinal directions (L1, L2), the preforms (5) to be sorted on the sorting arrangement (10) are conveyed along these longitudinal directions (L1, L2), wherein arranged between the two rollers (14, 16) is an intermediate space (Z) which receives at least a region of the preforms (5).

12. Method according to claim 10, **characterised in that** the preforms (5) to be sorted on the sorting arrangement (10) are sorted by means of a rotatably mounted disc which exerts a centrifugal force on the preforms (5) and thereby moves them to the edge region of the sorting arrangement (10) where transport takes place between the disc and a bar arranged at a distance from this disc.

13. Method according to at least one of the preceding claims 10 to 12, **characterised in that** an apparatus according to at least one of the preceding claims 1 to 9 is used for sorting the preforms.

## Revendications

1. Dispositif (1) pour le tri d'ébauches (5), comportant un système de tri (10) et comportant un dispositif de transport (12) qui transporte les ébauches (5) vers le système de tri (10), sachant qu'au-dessus du dispositif de transport (12) est prévu au moins un dispositif de déplacement (6a, 6b, 6c, 6d), qui entre en contact au moins temporairement avec les ébauches (5) et les déplace par rapport au dispositif de transport (12), ledit dispositif de déplacement (6a, 6b, 6c, 6d) étant au moins une plaque (6a, 6b, 6c, 6d) apte à pivoter dans le sens de transport (R) des ébauches (5), **caractérisé en ce que** la plaque pivotante comporte des évidements (11) sur sa face inférieure.

2. Dispositif selon la revendication 1, **caractérisé en ce que** le système de tri (10) comporte deux cylindres (14, 16) parallèles entre eux, lesdits cylindres (14, 16) étant aptes à tourner autour de leur direction longitudinale (L1, L2) et les cylindres (14, 16) étant configurés de telle sorte que les ébauches (5) sont transportées le long de ces cylindres (14, 16).

3. Dispositif selon la revendication 1, **caractérisé en ce que** le système de tri (10) comporte un disque monté rotatif, qui comporte une barre de guidage dans la zone de son bord extérieur, laquelle est disposée à une distance telle du disque que les ébauches à trier sont maintenues et transportées entre la barre de guidage et le disque, lesdites ébauches étant sollicitées par une force centrifuge sous l'effet du disque entraîné en rotation pendant le tri.

4. Dispositif (1) selon au moins l'une quelconque des revendications précédentes, **caractérisé en ce que** le dispositif de transport (12) est une bande transporteuse (12).

5. Dispositif (1) selon au moins l'une quelconque des revend ications précédentes, **caractérisé en ce qu'**au moins trois plaques (6a, 6b, 6c, 6d) pivotantes sont disposées les unes derrière les autres dans le sens de transport (R) des ébauches (5) sur le dispositif de transport (12).

6. Dispositif (1) selon au moins l'une quelconque des revend ications précédentes, **caractérisé en ce qu'**au moins l'une des plaques
(6a, 6b, 6c, 6d) pivotantes comporte un évidement (11) sur la face orientée vers le dispositif de transport (12).

7. Dispositif (1) selon la revendication 4, **caractérisé en ce qu'**au moins deux plaques (6a, 6b, 6c, 6d), disposées l'une derrière l'autre, comportent des évidements (11) sur la face orientée vers le dispositif de transport (12), et lesdits évidements (11) sont disposés les uns derrière les autres dans le sens de transport (R) des ébauches (5) sur le dispositif de transport (12).

8. Dispositif (1) selon au moins l'une quelconque des revendications précédentes, **caractérisé en ce que**, entre le dispositif de transport (12) et le système de tri (10), il est prévu un dispositif de glissement (8), le long duquel les ébauches peuvent glisser depuis le dispositif de transport (12) vers le système de tri (10).

9. Dispositif (1) selon au moins l'une quelconque des revendications précédentes, **caractérisé en ce que** le dispositif de transport (12) est agencé plus haut que le système de tri (10).

10. Procédé pour le tri d'ébauches (5), lesdites ébauches (5) étant transportées par un dispositif de transport (12) vers un système de tri (10), **caractérisé en ce que** les ébauches (5), pendant le transport sur le dispositif de transport (12), sont tournées par rapport au dispositif de transport (12) au moyen d'une plaque apte à pivoter dans le sens de transport (R) des ébauches, ladite plaque (6a, 6b, 6c, 6d) pivotante comportant des évidements (11) sur sa face inférieure.

11. Procédé selon la revendication 10, **caractérisé en ce que** les ébauches (5) à trier sur le système de tri (10) au moyen de deux cylindres (14, 16), qui sont amenés en rotation autour de leurs directions longitudinales (L1, L2) parallèles, sont transportées le long de ces directions longitudinales (L1, L2), sachant qu'un espace intermédiaire (Z), qui reçoit au moins une zone des ébauches (5), est agencé entre les deux cylindres (14, 16).

12. Procédé selon la revendication 10, **caractérisé en ce que** les ébauches (5) à trier sont triées sur le système de tri (10) au moyen d'un disque monté rotatif, qui exerce une force centrifuge sur les ébauches (5) et
qui, de ce fait, les déplace dans la zone du bord du système de tri (10), où se produit un transport entre le disque et une barre de guidage agencée à distance de ce disque.

13. Procédé selon au moins l'une quelconque des revendications 10 à 12 précédentes, **caractérisé en ce que**, pour trier les ébauches, on utilise un dispositif selon au moins l'une quelconque des revendications 1 à 9 précédentes.
